# EUROPEAN PATENT APPLICATION

(11) **EP 3 943 786 A1**
(43) Date of publication of application: **26.01.2022**
(21) Application number: 20772980.7
(22) Date of filing: 16.03.2020
(51) Int. Cl.: F16J 15/3232

(54) **SEALING DEVICE**

(30) Priority: 20.03.2019 JP 2019052445
(71) Applicant: NOK Corporation, Minato-ku Tokyo 105-8585 (JP)
(72) Inventor: KISHIRO Masamichi, Fukushima-shi, Fukushima 960-1193 (JP); NISHIMURA Nobuhiro, Fukushima-shi, Fukushima 960-1193 (JP)
(74) Representative: TBK
(86) International application number: PCT/JP2020/011376
(87) International publication number: WO 2020/189612

(57) **Abstract**

Provided is a sealing apparatus that can prevent a garter spring from falling off an elastic member. The sealing apparatus comprises a reinforcing ring formed annularly around an axis, an elastic body part that is attached to the reinforcing ring and that is formed annularly around the axis, and a garter spring attached to the elastic body part. The reinforcing ring includes a retainer that is an annular portion projecting to an outer periphery side from an end portion on one side of the reinforcing ring in a direction of the axis. The elastic body part has at least one projection that is formed on the one side of a zone to which the garter spring is attached in the direction of the axis and that projects from the elastic body part to the outer periphery side.

## Description

### Technical Field

The present invention relates to a sealing apparatus, and particularly relates to a sealing apparatus used for an intake or exhaust valve in an internal-combustion engine for vehicles, general-purpose machinery, and other equipment.

### Background Art

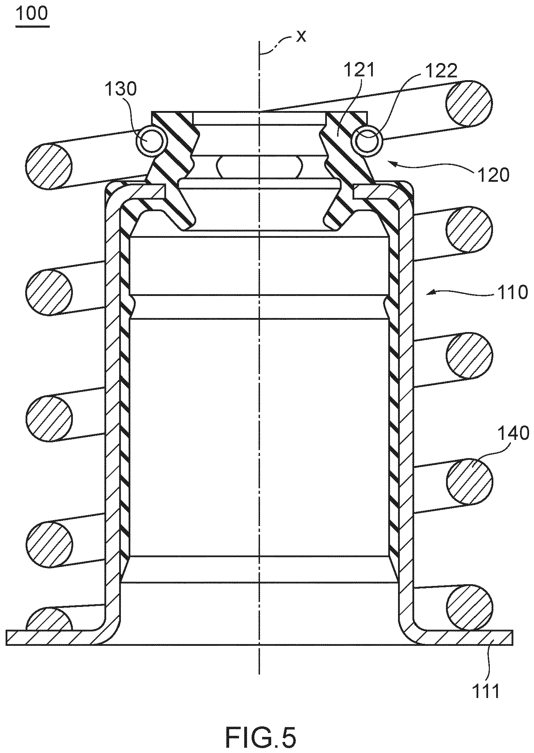

Fig. 5 is a cross-sectional view of a conventional valve stem seal 100 taken along an axis x. As illustrated in Fig. 5, the conventional valve stem seal 100 comprises a reinforcing ring 110 that is made of metal and that is formed annularly around the axis x, an elastic member 120 that is integrally attached to the reinforcing ring 110 and that is formed annularly around the axis x, and a garter spring 130 attached to the elastic member 120. The garter spring 130 applies a tensional force to the elastic member 120 against a stem of a valve (not illustrated) in a usage state. This enables a seal lip 121 to follow the stem and the valve stem seal 100 to display improved sealing performance. A conventional valve stem seal like the valve stem seal 100 includes a retainer 111 that is an annular flange projecting from an end portion of the reinforcing ring 110 to an outer periphery side to prevent wear on a valve spring 140 (for example, see Patent Literature 1).

### Document List

### Patent Literature

Patent Literature 1: Japanese Patent No. 5185979

### Summary of Invention

### Technical Problem

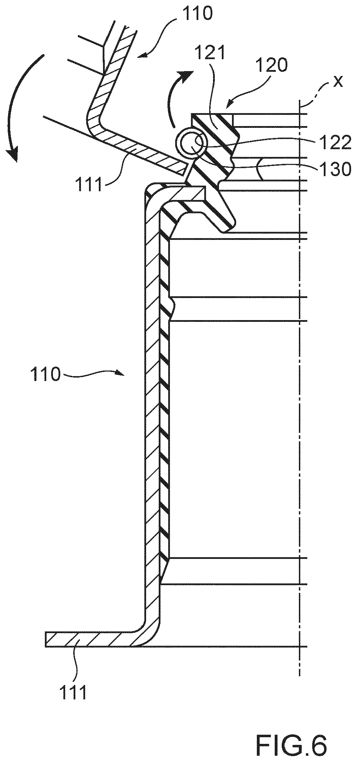

As described above, some conventional valve stem seals like the valve stem seal 100 have retainers 111. When a plurality of such valve stem seals 100 are packed and transported, or in other similar cases, it is feared that a retainer 111 of one valve stem seal 100 can be caught by a garter spring 130 of another valve stem seal 100, causing the garter spring 130 to fall off a groove 122 (see Fig. 6).

In this way, the conventional sealing apparatus 100 has been required to have a structure that can prevent the garter spring from falling off the elastic member.

In view of the challenge described above, it is an object of the present invention to provide a sealing apparatus that can prevent a garter spring from falling off an elastic member.

### Solution to Problem

A sealing apparatus according to the present invention, to attain the object described above, is characterized by comprising: a reinforcing ring that is made of a metal material and that is formed annularly around an axis; an elastic body part that is made of an elastic material attached to the reinforcing ring and that is formed annularly around the axis, the elastic body part including a seal lip that projects to an inner periphery side and that is formed annularly around the axis; and a garter spring attached to the elastic body part, the garter spring being on an outer periphery side of the seal lip and facing away from the seal lip, wherein the reinforcing ring includes a retainer that is an annular portion projecting to the outer periphery side from an end portion on one side of the reinforcing ring in a direction of the axis, and wherein the elastic body part has at least one projection that is formed on the one side of a zone to which the garter spring is attached in the direction of the axis and that projects from the elastic body part to the outer periphery side.

In the sealing apparatus according to one aspect of the present invention, the projection is provided at a place that at least allows the projection to contact the garter spring that has moved from the zone to which the garter spring is attached.

In the sealing apparatus according to one aspect of the present invention, the seal lip is provided on another side of an end portion on another side of the reinforcing ring in the direction of the axis, and the projection is formed between the zone to which the garter spring is attached and the end portion on the other side of the reinforcing ring in the direction of the axis.

In the sealing apparatus according to one aspect of the present invention, a plurality of the projections are provided and are arranged uniformly around the axis.

In the sealing apparatus according to one aspect of the present invention, the projection is formed in an endless annular shape.

### Effects of Invention

The present invention can provide a sealing apparatus that can prevent a garter spring from falling off an elastic member.

### Brief Description of Drawings

[Fig. 1] A cross-sectional view taken along an axis illustrating a configuration of a sealing apparatus according to an embodiment of the present invention;
[Fig. 2] A partial enlarged cross-sectional view enlargedly illustrating a part of the sealing apparatus of Fig. 1;
[Fig. 3] A cross-sectional view taken along an axis illustrating a sealing apparatus according to a modification example of the embodiment of the present invention;
[Fig. 4] A partial enlarged cross-sectional view enlargedly illustrating a part of the sealing apparatus of Fig. 3;
[Fig. 5] A cross-sectional view taken along an axis illustrating a state in which a valve spring is attached to a conventional sealing apparatus; and
[Fig. 6] A partial cross-sectional view illustrating a situation in which a retainer comes into contact with a garter spring of the sealing apparatus of Fig. 5.

### Description of Embodiment

Hereinafter, an embodiment of the present invention will be described with reference to the drawings.

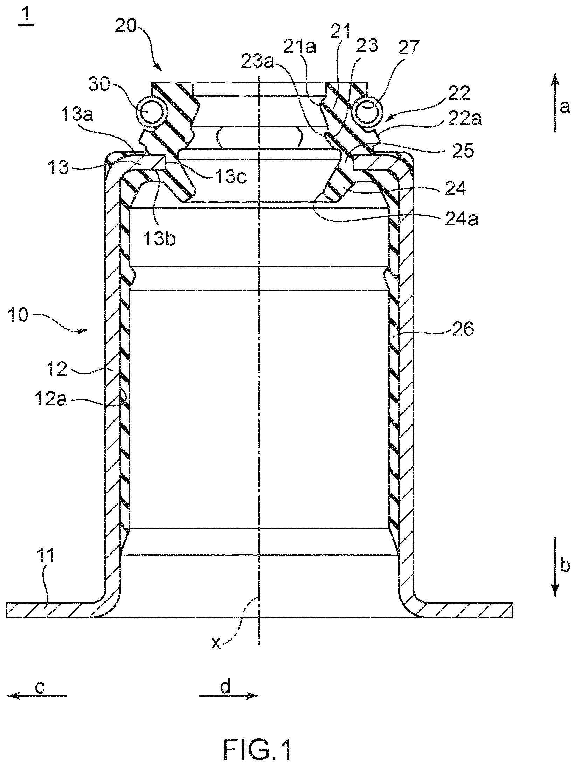

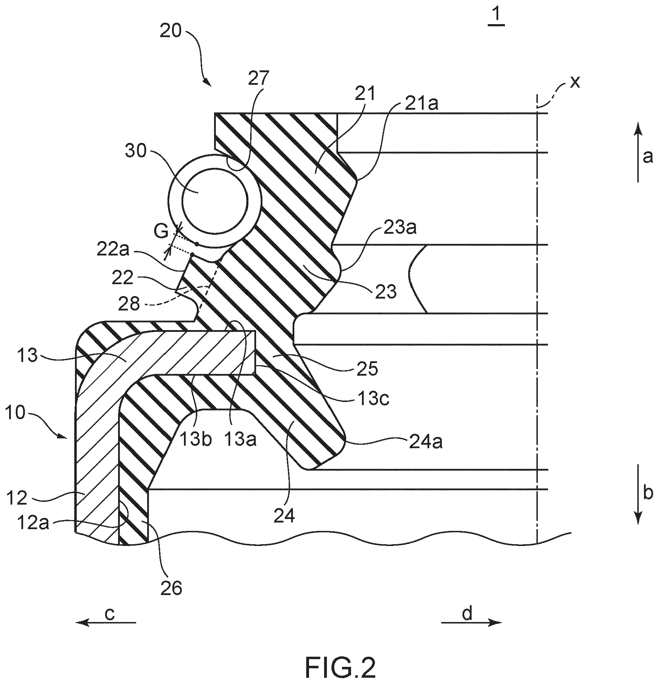

Fig. 1 is a cross-sectional view illustrating a configuration of a sealing apparatus 1 according to an embodiment of the present invention, taken from a cross section along an axis x (hereinafter also referred to simply as a "cross section"). Fig. 2 is a partial enlarged cross-sectional view enlargedly illustrating a part of the sealing apparatus 1 of Fig. 1. Hereinafter, a direction directed by an arrow a along the axis x represents an outer side, and a direction directed by an arrow b along the axis x represents an inner side, for convenience of explanation. The outer side means a direction or a side equivalent to a direction that the sealing apparatus 1 in a state of being attached to an intake or exhaust valve in an internal-combustion engine (not illustrated) follows to leave from a combustion chamber. The inner side means a direction or a side equivalent to a direction that the sealing apparatus 1 in a state of being attached to an intake or exhaust valve in an internal-combustion engine (not illustrated) follows to approach a combustion chamber. In a direction perpendicular to the axis x (hereinafter also referred to as a "radial direction"), a direction away from the axis x represents an outer periphery side (a direction directed by an arrow c), and a direction approaching the axis x represents an inner periphery side (a direction directed by an arrow d).

As illustrated in Fig. 1, the sealing apparatus 1 according to the embodiment of the present invention comprises a reinforcing ring 10 that is made of a metal material and that is formed annularly around the axis x, an elastic body part 20 that is made of an elastic material attached to the reinforcing ring 10 and that is formed annularly around the axis x, and a garter spring 30 attached to the elastic body part 20. The elastic body part 20 includes a seal lip 21 that projects to the inner periphery side (the arrow d direction side) and that is formed annularly around the axis x. The garter spring 30 is on the outer periphery side (the arrow c direction side) of the seal lip 21 and faces away from the seal lip 21.

As illustrated in Fig. 1, the reinforcing ring 10 includes a retainer 11, an annular portion projecting to the outer periphery side from an end portion on the inner side (the arrow b direction side) that is one side of the reinforcing ring 10 in a direction of the axis x. The elastic body part 20 has at least one projection 22 that is formed on the one side (the inner side) of a zone to which the garter spring 30 is attached in the direction of the axis x and that projects from the elastic body part 20 to the outer periphery side. Hereinafter, the configuration of the sealing apparatus 1 will be described in detail.

The reinforcing ring 10, as illustrated in Fig. 1, includes a cylindrical part 12 that is a cylindrical or substantially cylindrical portion extending along the axis x and a flange 13 that is an annular portion extending to the inner periphery side from an end portion on the outer side of the cylindrical part 12. The retainer 11 of the reinforcing ring 10, as illustrated in Fig. 1, is a portion that extends in the radial direction and that is formed annularly around the axis x, projecting to the outer periphery side from an end portion on the inner side of the cylindrical part 12. The retainer 11, the cylindrical part 12, and the flange 13 are portions of the reinforcing ring 10 and they are integrated to form the reinforcing ring 10. The cylindrical part 12 is formed such that a guide sleeve used to guide a stem of an intake or exhaust valve (not illustrated) is allowed to be fit to the cylindrical part 12 through a gasket part 26 of the elastic body part 20 described later. The retainer 11 is formed such that one end of a valve spring of an intake or exhaust valve (not illustrated) is allowed to contact the retainer 11 in a state in which the reinforcing ring 10 is attached to an internal-combustion engine (not illustrated).

As illustrated in Figs. 1 and 2, the elastic body part 20 is formed integrally with the reinforcing ring 10 so as to cover the whole of the flange 13 of the reinforcing ring 10 and cover a part of the cylindrical part 12 of the reinforcing ring 10. Specifically, the elastic body part 20 covers a flange outer-side surface 13a, a surface facing the outer side, a flange inner-side surface 13b, a surface facing the inner side, and a flange inner peripheral surface 13c, a surface facing the inner periphery side, of the flange 13. The elastic body part 20 also covers at least a part of an adherend surface 12a, a surface facing the inner periphery side, of the cylindrical part 12.

As illustrated in Figs. 1 and 2, the elastic body part 20 includes the seal lip 21, an ancillary lip 23 that is provided on the inner side of the seal lip 21 and that is formed annularly around the axis x, and an inner-side lip 24 that is provided on the inner side of the ancillary lip 23 and that is formed annularly around the axis x. The elastic body part 20 also includes a lip waist portion 25 formed annularly around the axis x and the gasket part 26. The lip waist portion 25 is a portion of the elastic body part 20 positioned in a vicinity of an end portion on the inner periphery side of the flange 13 of the reinforcing ring 10. The gasket part 26 is a portion of the elastic body part 20 attached to the adherend surface 12a of the cylindrical part 12 of the reinforcing ring 10.

The seal lip 21 is provided on another side (the outer side) of the flange 13, an end portion on another side of the reinforcing ring 10 in the direction of the axis x, and is provided on the outer side of the lip waist portion 25. The seal lip 21 is an annular portion that has a cross section formed in a wedge shape projecting toward the inner periphery side. A seal-lip distal end portion 21a, a distal end portion of the seal lip 21, is formed so as to contact an outer peripheral surface of the stem of the intake or exhaust valve (not illustrated) so that the stem (not illustrated) is slidable in a usage state in which the sealing apparatus 1 is attached to the stem (hereinafter also simply referred to as a "usage state"). The seal lip 21 has a groove 27, a part that is recessed to the inner periphery side and that is formed annularly around axis x. The groove 27 is at a position that is on the outer periphery side of the seal-lip distal end portion 21a and that faces away from the seal-lip distal end portion 21a. The garter spring 30 is housed in the groove 27.

The ancillary lip 23 is an annular portion that is provided on the outer side of the lip waist portion 25 and that has a cross section formed in a wedge shape projecting toward the inner periphery side. An ancillary-lip distal end portion 23a, a distal end portion of the ancillary lip 23, is formed so as to contact the outer peripheral surface of the stem (not illustrated) when the sealing apparatus 1 is in the usage state.

The inner-side lip 24 extends from the lip waist portion 25 to the inner side diagonally relative to the axis x and has a shape that decreases in diameter as progress toward the inner side. An inner-side-lip distal end portion 24a, a distal end portion of the inner-side lip 24, is formed so as to contact the outer peripheral surface of the stem (not illustrated) so that the stem is slidable when the sealing apparatus 1 is in the usage state.

A thickness in the radial direction of the gasket part 26 is set such that, when a guide sleeve used to guide the stem of the intake or exhaust valve (not illustrated) is press-fitted, the gasket part 26 is compressed between the guide sleeve and the cylindrical part 12 of the reinforcing ring 10 in the radial direction to generate a fitting force of a predetermined magnitude in the radial direction.

As illustrated in Figs. 1 and 2, the projection 22 is provided at a place that at least allows the projection 22 to contact the garter spring 30 that has moved from the groove 27, a zone to which the garter spring 30 is attached. The projection 22 may be provided at a place that allows the projection 22 to contact the garter spring 30 that is in a state of being housed in the groove 27 without having moved from the groove 27. Specifically, the projection 22, as illustrated in Fig. 2, is provided at a place that has a predetermined gap G relative to the garter spring 30 housed in the groove 27. The projection 22 may be provided at a place so as to contact the garter spring 30 housed in the groove 27.

The projection 22 is formed between the groove 27, a zone to which the garter spring 30 is attached, and the flange 13, an end portion on the other side of the reinforcing ring 10 in the direction of the axis x. A plurality of the projections 22 are provided and are arranged uniformly around the axis x. The projections 22 each extend in a shape of an arc or a circular segment along a circle around the axis x. The elastic body part 20 may be provided with only one projection 22. In this case, the projection 22 is formed in an endless annular shape, for example. Even if the elastic body part 20 is provided with only one projection 22, the projection 22 may not be endlessly annular but may have, for example, the shape of an arc or a circular segment as described above. The shape, the number, the position, and other forms of the projections 22 are preferably forms that enable equalization of stiffness of the seal lip 21, the ancillary lip 23, and the inner-side lip 24 around the axis x. In this regard, it is preferred that the plurality of the projections 22 be uniformly arranged around the axis x. However, the plurality of the projections 22 may not be uniformly arranged around the axis x.

An outer peripheral face 28 of the elastic body part 20 is a surface that is on the inner side of the groove 27 and that faces the outer periphery side, and the projection 22 extends from the outer peripheral face 28 to the outer side diagonally relative to the axis x. The projection 22 may extend from the outer peripheral face 28 to the inner side diagonally relative to the axis x or may extend from the outer peripheral face 28 to the outer periphery side in the radial direction. The projection 22 has a rectangular or substantially rectangular shape in cross section. The projection 22 may have a cross-sectional shape that decreases or increases in area with an increase in distance from the axis x or may have another shape. A projection distal end portion 22a of the projection 22 has a flat surface. The projection distal end portion 22a may have a curved surface or a combination of a flat surface and a curved surface. The projection 22 extends so as to cover at least a part of the garter spring 30 when viewed from the inner side to the outer side along the axis x. The projection 22 may extend so as to cover the whole of the garter spring 30 or may extend beyond the garter spring 30 when viewed from the inner side to the outer side along the axis x.

The garter spring 30 is fitted to the groove 27 formed in the seal lip 21. The garter spring 30 is, for example, a coiled spring member made of metal and presses the seal-lip distal end portion 21a in a direction toward the axis x to apply a tensional force of a predetermined magnitude to the seal-lip distal end portion 21a against the stem of the intake or exhaust valve (not illustrated) such that the seal-lip distal end portion 21a follows a displacement of the stem. The garter spring 30 may be made of any of various materials, such as a resin, other than metal.

The metal material for the reinforcing ring 10 is, for example, stainless steel or SPCC (a cold rolled steel sheet). The reinforcing ring 10 is manufactured by press working or forging, for example, and the elastic body part 20 is molded with a mold by cross-linking (vulcanization). During the cross-linking, the reinforcing ring 10 is placed in the mold, the elastic body part 20 is bonded to the reinforcing ring 10 by cross-linking bonding, and the elastic body part 20 is integrally molded with the reinforcing ring 10. The seal lip 21, the projection 22, the ancillary lip 23, the inner-side lip 24, the lip waist portion 25, and the gasket part 26 are portions of the elastic body part 20 and they are integrated to form the elastic body part 20.

Next, operation of the sealing apparatus 1 according to the present embodiment will be described. In cases such as when a plurality of sealing apparatuses 1 are packed and transported, even if a retainer 11 of a sealing apparatus 1 is placed in a vicinity of a garter spring 30 of another sealing apparatus 1, the configuration of the sealing apparatus 1 inhibits the retainer 11 from contacting a projection 22 of the other sealing apparatus 1 or inhibits the retainer 11 from entering between the garter spring 30 and a groove 27 of the other sealing apparatus 1 and thereby prevents the garter spring 30 from coming off an elastic body part 20 of the other sealing apparatus 1. Even if the retainer 11 contacts the garter spring 30, the projection 22 extending so as to cover at least a part of the garter spring 30 when viewed along the direction of the axis x prevents the garter spring 30 from being drawn beyond the projection 22.

When the projections 22 are arranged uniformly around the axis x or the projection 22 is formed in an endless annular shape, the projections 22 can equalize or substantially equalize stiffness of the seal lip 21, the ancillary lip 23, and the inner-side lip 24 around the axis x and can equalize or substantially equalize contact state of the seal lip 21 and the inner-side lip 24 with the stem (not illustrated) around the axis x.

In this way, in the sealing apparatus 1 according to the embodiment of the present invention, the projections 22 projecting to the outer periphery side are provided in the vicinity of the groove 27 to which the garter spring 30 is attached. This configuration, even when a plurality of sealing apparatuses 1 are packed and transported, inhibits a retainer 11 of a sealing apparatus 1 from entering between a garter spring 30 and a groove 27 of another sealing apparatus 1 and can prevent the garter spring 30 from falling off an elastic body part 20 of the other sealing apparatus 1.

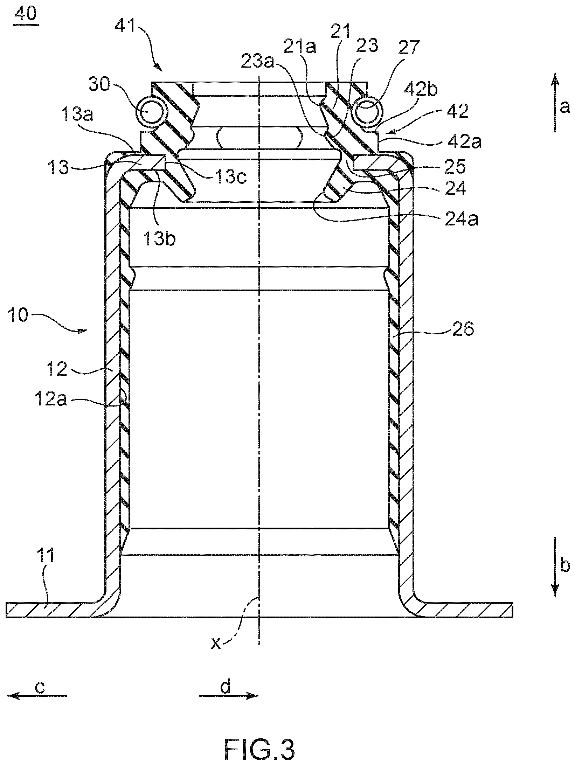

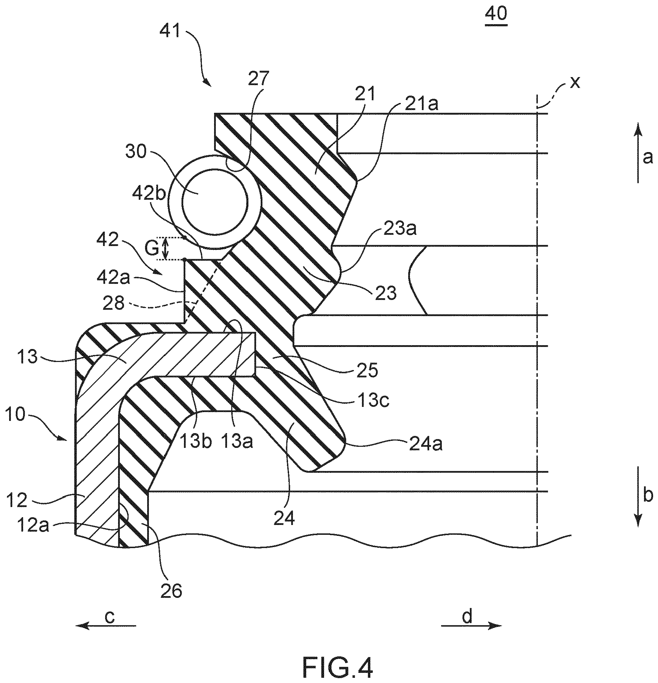

Next, a modification example of the embodiment of the present invention will be described. Fig. 3 is a cross-sectional view taken along an axis x illustrating a sealing apparatus 40, a modification example of the sealing apparatus 1, according to an embodiment of the present invention. Fig. 4 is a partial enlarged cross-sectional view enlargedly illustrating a part of the sealing apparatus 40 of Fig. 3. The sealing apparatus 40 differs from the sealing apparatus 1 described above in configuration of an elastic body part 41 described later, specifically configuration of a projection 42. Hereinafter, components of the sealing apparatus 40 that are identical or similar in function to those of the sealing apparatus 1 are assigned the same reference signs, and descriptions thereof are omitted. Parts that differ between the sealing apparatuses will be described.

As illustrated in Figs. 3 and 4, the projection 42 projects from the outer peripheral face 28 of the elastic body part 20 to the outer periphery side and has a projection outer peripheral surface 42a and a projection outer-side surface 42b. The projection outer peripheral surface 42a is a cylindrical or substantially cylindrical surface facing the outer periphery side and extending to the outer side along the axis x from a portion of the elastic body part 20 that covers the flange outer-side surface 13a of the flange 13 of the reinforcing ring 10. The projection outer-side surface 42b is an annular surface facing the outer side and extending to the inner periphery side from an end portion on the outer side of the projection outer peripheral surface 42a.

Although the preferred embodiment of the present invention has been described above, the present invention is not limited to the sealing apparatuses 1 and 40 according to the embodiment described above, and includes any modes falling within the scope of the concept and claims of the present invention. Respective configurations may be appropriately selectively combined to solve at least a part of the above-described problems and achieve at least a part of the above-described effects. For example, in the above-described embodiment, the shape, material, arrangement, size and the like of each component can be appropriately changed according to a specific use mode of the present invention.

### List of Reference Signs

- 1, 40: sealing apparatus,
- 10, 110: reinforcing ring,
- 11, 111: retainer,
- 12: cylindrical part,
- 12a: adherend surface,
- 13: flange,
- 13a: flange outer-side surface,
- 13b: flange inner-side surface,
- 13c: flange inner peripheral surface,
- 20, 41: elastic body part,
- 21, 121: seal lip,
- 21a: seal-lip distal end portion,
- 22, 42: projection,
- 22a: projection distal end portion,
- 23: ancillary lip,
- 23a: ancillary-lip distal end portion,
- 24: inner-side lip,
- 24a: inner-side-lip distal end portion,
- 25: lip waist portion,
- 26: gasket part,
- 27, 122: groove,
- 28: outer peripheral face,
- 30, 130: garter spring,
- 42a: projection outer peripheral surface,
- 42b: projection outer-side surface,
- 100: valve stem seal,
- 120: elastic member,
- 140: valve spring,
- a: outer side,
- b: inner side,
- c: outer periphery side,
- d: inner periphery side,
- G: gap,
- x: axis

## Claims

1. A sealing apparatus **characterized by** comprising:
a reinforcing ring that is made of a metal material and that is formed annularly around an axis;
an elastic body part that is made of an elastic material attached to the reinforcing ring and that is formed annularly around the axis, the elastic body part including a seal lip that projects to an inner periphery side and that is formed annularly around the axis; and
a garter spring attached to the elastic body part, the garter spring being on an outer periphery side of the seal lip and facing away from the seal lip,
wherein the reinforcing ring includes a retainer that is an annular portion projecting to the outer periphery side from an end portion on one side of the reinforcing ring in a direction of the axis, and
wherein the elastic body part has at least one projection that is formed on the one side of a zone to which the garter spring is attached in the direction of the axis and that projects from the elastic body part to the outer periphery side.

2. The sealing apparatus according to claim 1, **characterized in that** the projection is provided at a place that at least allows the projection to contact the garter spring that has moved from the zone to which the garter spring is attached.

3. The sealing apparatus according to claim 1 or 2, **characterized in that** the seal lip is provided on another side of an end portion on the other side of the reinforcing ring in the direction of the axis, and
the projection is formed between the zone to which the garter spring is attached and the end portion on the other side of the reinforcing ring in the direction of the axis.

4. The sealing apparatus according to any one of claims 1 to 3, **characterized in that** a plurality of the projections are provided and are arranged uniformly around the axis.

5. The sealing apparatus according to any one of claims 1 to 3, **characterized in that** the projection is formed in an endless annular shape.
